# EUROPEAN PATENT SPECIFICATION

(11) **EP 4 573 802 B1**
(45) Date of publication and mention of the grant of the patent: **09.09.2026**
(21) Application number: 23751383.3
(22) Date of filing: 27.07.2023
(51) Int. Cl.: H04W 40/22

(54) **RELAY CONNECTIONS IN A COMMUNICATION NETWORK**
RELAISVERBINDUNGEN IN EINEM KOMMUNIKATIONSNETZ
CONNEXIONS EN MODE RELAIS DANS UN RÉSEAU DE COMMUNICATION

(30) Priority: 15.08.2022 WO PCT/CN2022/112495
(43) Date of publication of application: 25.06.2025
(73) Proprietor: Telefonaktiebolaget LM Ericsson (publ), 164 83 Stockholm (SE)
(72) Inventor: WANG, Cheng, Shanghai 200335 (CN)
(74) Representative: Ericsson
(86) International application number: PCT/IB2023/057654
(87) International publication number: WO 2024/038340

(56) References cited:
- CN-A- 115 529 678
- US-A1- 2019 239 147
- "3rd Generation Partnership Project; Technical Specification Group Services and System Aspects; Security aspects of Proximity based Services (ProSe) in the 5G System (5GS) (Release 17)", 15 June 2022 (2022-06-15), XP052201781, Retrieved from the Internet <URL:https://ftp.3gpp.org/3guInternal/3GPP_ultimate_versions_to_be_transposed/sentToDpc/33503-h00.zip 33503-h00.docx> [retrieved on 20220615]
- ERICSSON: "Update to solution #31", vol. SA WG3, no. Berlin, Germany; 20230522 - 20230526, 15 May 2023 (2023-05-15), XP052388556, Retrieved from the Internet <URL:https://ftp.3gpp.org/tsg_sa/WG3_Security/TSGS3_111_Berlin/Docs/S3-232680.zip S3-232680.docx> [retrieved on 20230515]
- INTERDIGITAL: "Selection between security mechanisms with or without network assistance", vol. SA WG3, no. Berlin, Germany; 20230522 - 20230526, 14 May 2023 (2023-05-14), XP052376506, Retrieved from the Internet <URL:https://ftp.3gpp.org/tsg_sa/WG3_Security/TSGS3_111_Berlin/Docs/S3-232592.zip S3-232592 Selection between security mechanisms with or without network assistance.docx> [retrieved on 20230514]

## Description

### BACKGROUND

A 5G Proximity Services (ProSe) UE-to-Network Relay is a User Equipment (UE) that provides functionality to support connectivity to a network for 5G ProSe Remote UE(s). The architecture of such a connection is shown in FIG. (FIG.) 1.

Both can be used for 5G ProSe UE-to-Network Relay authorization and security establishment in the PC5 interface. The UP-based procedure uses a UP connection to the 5G PKMF in the 5GC, while the CP-based procedure uses the ProSe authentication vehicle over NAS procedure towards AMF and AUSF in the 5GC.

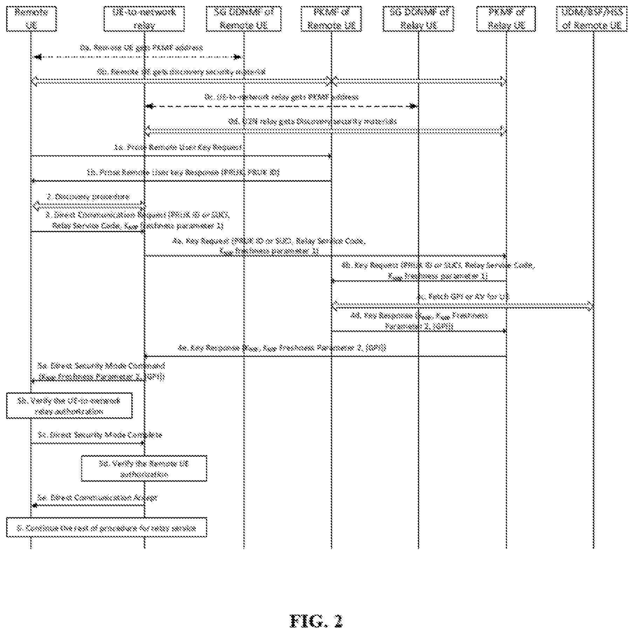

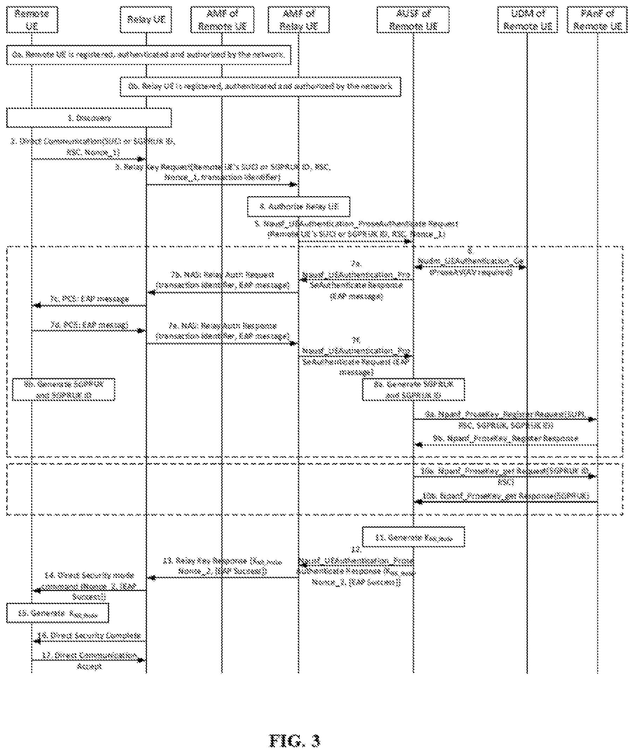

The high-level flow of security for UE-to-Network Relay is shown in FIGs. 2 and 3. FIG. 2 shows the UP-based authorization and secure link establishment procedure. FIG. 3 shows the CP-based authorization and secure link establishment procedure.

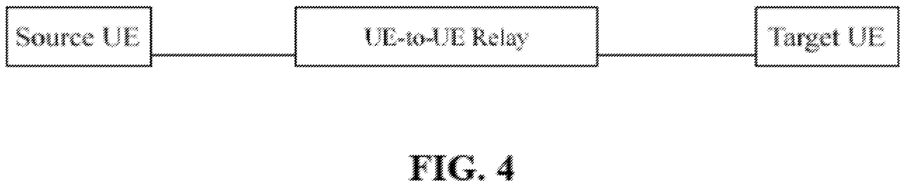

3GPP is now studying the support of a UE-to-UE Relay. A 5G ProSe UE-to-UE Relay is a LTE that provides functionality to support connectivity between 5G ProSe UE-to-UE (U2U) UEs. See the example architecture in FIG. 4.

For UE-to-UE relay use cases, any one or more (or all) of the source UE, the target UE, and the UE-to-UE relay may be in or out of 3GPP coverage.

3GPP TS 33.503 v17.0.0 section 6.3.3 relates to security for 5G ProSe Communication via 5G ProSe Layer-3 UE-to-Network Relay.

### SUMMARY

The disclosed subject matter was developed in consideration of certain shortcomings of existing systems, such as the following.

3GPP has yet to determine how to establish the connection between the source UE and the target UE via a UE-to-UE Relay, and/or how to establish the security of such a connection. The UE-to-UE Relay as a relaying entity, has much similarity to the UE-to-Network Relay. It is expected that the security procedure to set up PC5 connection of a UE to a UE-to-UE Relay can be largely alike the procedure of setting up PC5 connection of a UE to a UE-to-Network Relay, e.g., the procedures depicted above in FIGs. 2 and 3.

However, the procedures defined for a UE-to-Network Relay take a prerequisite that the UE-to-Network Relay is connected to the 5GC network and makes use of the service/functionality provided by the network to perform the required security procedure. These procedures may be called Network-based security in this document.

One problem with this is that a UE-to-UE relay may be in or out of 3GPP coverage, i.e., may be connected or not connected to the network.

Therefore, it is unclear how in UE-to-UE relay case, whether and when the Network based Authentication and Authorization procedure can be used for PC5 connection security between a UE and a UE-to-UE relay and/or how to choose a proper method if multiple security methods are available. The following embodiments, aspects, examples and implementation clauses in this section are provided for a better understanding of the invention which is solely defined by the appended claims.

Certain aspects of the disclosure and their embodiments may provide solutions to these or other issues. Embodiments of the disclosed subject matter propose that a UE-to-UE relay can announce whether network-based security methods are supported and available for a certain UE-to-UE relay service, based on its connection status towards the network.

Additionally or alternatively, a UE-to-UE relay can announce its preference to support one particular security method if more than one method is supported.

Certain embodiments may provide the technical advantage(s) of providing a clear, robust and reliable method for selection of security methods in UE-to-UE relay scenarios.

In some embodiments of the disclosed subject matter, a method performed by a user equipment comprises preparing an announcement message for transmission, the announcement message comprising (a) an indication of a capability of the user equipment to act as a relay in a UE-to-UE, U2U, connection, and (b) responsive to a determination that the UE is connected to a radio communication network, an indication that network-based security protocols are available to establish security for the U2U connection. The method further comprises transmitting the announcement message.

In certain related embodiments, the UE determines its connection status to the radio communication network periodically.

In certain related embodiments, the UE determines its connection status to the radio communication network upon reception of a discovery message from another UE.

In certain related embodiments, the indication that network-based security protocols are available is omitted from the announcement message responsive to a determination that the UE is not connected to the radio communication network.

In certain related embodiments, the indication that network-based security protocols are available is contained within a list of available security protocols to establish security for the U2U connection. In some such embodiments, the list of available security protocols comprises an indication of an order of preference of the available security protocols to establish security for the U2U connection. In some such embodiments, the available security protocols to establish security for the U2U connection comprise one or more peer-to-peer based security protocols.

In certain related embodiments, the announcement message is broadcast to enable discovery of the UE by one or more other UEs.

In certain related embodiments, the announcement message is transmitted in response to reception of a discovery message from another UE.

In certain related embodiments, the method further comprises transmitting a discovery key request message to a core network node and, in response, receiving a relay service code authorizing the UE to act as a relay in a U2U connection.

In certain related embodiments, the announcement message comprises an indication of the relay service code.

In certain related embodiments, the discovery key request message further comprises an indication of the UE's capability to act as a relay in a U2U connection.

In certain related embodiments, the method further comprises establishing a U2U connection with a source UE and a target UE. In some such embodiments, the method further comprises establishing the U2U connection comprises receiving a connection request message from one or more of the source UE and the target UE comprising an indication of a selected security protocol for the establishment of security for the U2U connection.

In some embodiments of the disclosed subject matter, a method performed by a first user equipment, UE comprises detecting an announcement message transmitted by a second UE, the announcement message comprising an indication of a capability of the second UE to act as a relay in a U2U connection and, responsive to a determination that the second UE is connected to a radio communication network, an indication that network-based security protocols are available to establish security for the U2U connection, and establishing a U2U connection with a target UE via the second UE acting as relay.

In certain related embodiments, establishing the U2U connection comprises transmitting a connection request message to the second UE comprising an indication of a selected security protocol for the establishment of security for the U2U connection.

In certain related embodiments, the indication that network-based security protocols are available is contained within a list of available security protocols to establish security for the U2U connection.

In certain related embodiments, the list of available security protocols comprises an indication of an order of preference of the available security protocols to establish security for the U2U connection.

In certain related embodiments, the available security protocols to establish security for the U2U connection comprise one or more peer-to-peer based security protocols.

In certain related embodiments, the announcement message is broadcast by the second UE to enable discovery of the second UE.

In certain related embodiments, the method further comprises transmitting a discovery message and receiving, in response, the announcement message from the second UE.

In certain related embodiments, the method further comprises transmitting a discovery key request message to a core network node and, in response, receiving a relay service code authorizing the first UE to act as a source or target UE in a U2U connection. In some such embodiments, the discovery key request message further comprises an indication of the first UE's capability to act as a source or target UE in a U2U connection.

### BRIEF DESCRIPTION OF THE DRAWINGS

The drawings illustrate selected embodiments of the disclosed subject matter. In the drawings, like reference numbers indicate like features.

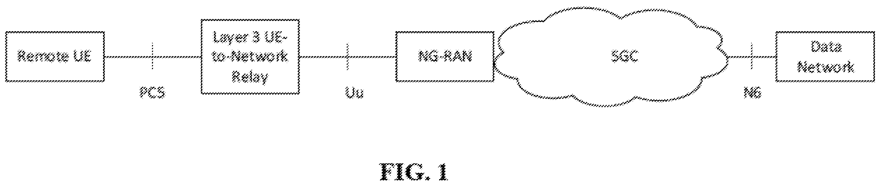

FIG. 1 shows a reference architecture for a 5G ProSe Layer-3 UE-to-Network Relay.
FIG. 2 shows an authorization and secure PC5 link establishment procedure for 5G ProSe UE-to-Network Relay.
FIG. 3 shows a 5G ProSe UE-to-Network Relay security procedure with setup of network Prose security context during PC5 link establishment.
FIG. 4 shows an example architecture for a UE-to-UE Relay.
FIG. 5 shows a processing and/or signalling flow according to some embodiments of the disclosed subject matter.
FIG. 6 shows a processing and/or signalling flow according to some embodiments of the disclosed subject matter.
FIG. 7 is a flow chart illustrating a method in accordance with some embodiments of the disclosed subject matter.
FIG. 8 is a flow chart illustrating a method in accordance with some embodiments of the disclosed subject matter.
FIG. 9 shows an example of a communication system in accordance with some embodiments of the disclosed subject matter.
FIG. 10 shows a UE in accordance with some embodiments of the disclosed subject matter.
FIG. 11 shows a network node in accordance with some embodiments of the disclosed subject matter.
FIG. 12 is a block diagram of a host.
FIG. 13 is a block diagram illustrating a virtualization environment in which functions implemented by some embodiments may be virtualized.
FIG. 14 shows a communication diagram of a host communicating via a network node with a UE over a partially wireless connection in accordance with some embodiments of the disclosed subject matter.

### DETAILED DESCRIPTION

Some of the embodiments contemplated herein will now be described more fully with reference to the accompanying drawings. Embodiments are provided by way of example to convey the scope of the subject matter to those skilled in the art.

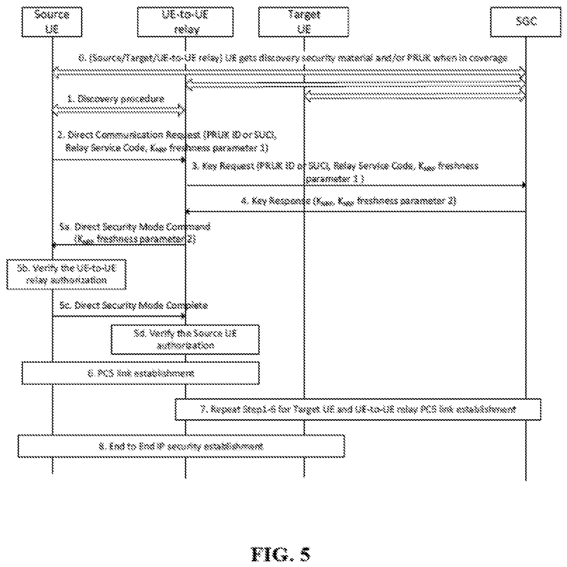

FIG. 5 shows a processing and/or signalling flow for network-based security when one or more of a Source UE, a UE-to-UE relay and a Target UE are in coverage, according to embodiments of the disclosed subject matter.

0. The 5G ProSe Source/Target UE and UE-to-UE relay are provisioned with the discovery security materials and/or PRUK when they are in coverage.
1. The discovery procedure for UE-to-UE Relay is performed by the 5G ProSe Source UE using the discovery parameters and discovery security material, based on the Relay Service Code for UE-to-UE Relay. If the UE-to-UE Relay is in 3GPP coverage, it also indicates whether network-based Relay service authentication and authorization is supported for UE-to-UE relay in the discovery announcement message.
2. If the discovered UE-to-UE Relay supports network-based Relay service authentication and authorization, the 5G ProSe Source UE sends an initial request message for network-based security. For example, the initial request message may comprise a Direct Communication Request (DCR) that contains ProSe Relay User Key (PRUK) ID or Subscription Concealed Identifier (SUCI), Relay Service Code (RSC) of the 5G ProSe UE-to-UE Relay service and K_{NRP} freshness parameter 1 to the 5G ProSe UE-to-UE Relay.
3. The 5G ProSe UE-to-UE Relay sends a Key Request message that contains PRUK ID or SUCI, RSC and K_{NRP} freshness parameter 1 to the 5GC.
   Note: 5GC NFs and internal signalling are not discussed here for brevity. The similar security procedure as Security for 5G ProSe Communication via 5G ProSe Layer-3 UE to-Network Relay as defined in TS33.503 can be reused.
4. The 5GC sends the Key Response message to the 5G ProSe UE-to-UE Relay, which includes K_{NRP}, K_{NRP} freshness parameter 2.

5a. The 5G ProSe UE-to-UE Relay shall derive the session key (K_{NRP-SESS}) from K_{NRP} and then derive the confidentiality key (NRPEK) (if applicable) and integrity key (NRPIK) based on the PC5 security policies as specified in TS 33.536 v17.1.0. The 5G ProSe UE-to-UE Relay sends a Direct Security Mode Command message to the 5G ProSe Source UE and include K_{NRP} Freshness Parameter 2 in the message.

5b. The 5G ProSe Source UE shall derive K_{NRP} from its PRUK, RSC, K_{NRP} Freshness Parameter 1 and the received K_{NRP} Freshness Parameter 2 and then derive the session key (K_{NRP-SESS}) and the confidentiality key (NRPEK) (if applicable) and integrity key (NRPIK) based on the PC5 security policies in the same manner as the 5G ProSe UE-to-UE Relay and process the Direct Security Mode Command. Successful verification of the Direct Security Mode Command assures the 5G ProSe Source UE that the 5G ProSe UE-to-UE Relay is authorized to provide the UE-to-UE relay service.

5c. The 5G ProSe Source UE responds with a Direct Security Mode Complete message to the 5G ProSe UE-to-UE Relay.

5d. On receiving the Direct Security Mode Complete message, the 5G ProSe UE-to-UE Relay shall verify the Direct Security Mode Complete message. Successful verification of the Direct Security Mode Complete message assures the 5G ProSe UE-to-UE Relay that the 5G ProSe Source UE is authorized to get the UE-to-UE relay service.

6. The 5G ProSe Source UE and 5G ProSe UE-to-UE Relay continues the rest of procedure for the UE-to-UE relay service over the secure PC5 link.

7. Step 1-6 are repeated for PC5 security establishment between the 5G ProSe Target UE and 5G ProSe UE-to-UE Relay.

8. The 5G ProSe Source UE and the 5G ProSe Target UE may establish an end-to-end Security via 5G ProSe UE-to-UE relay. The detail is not described in this solution.

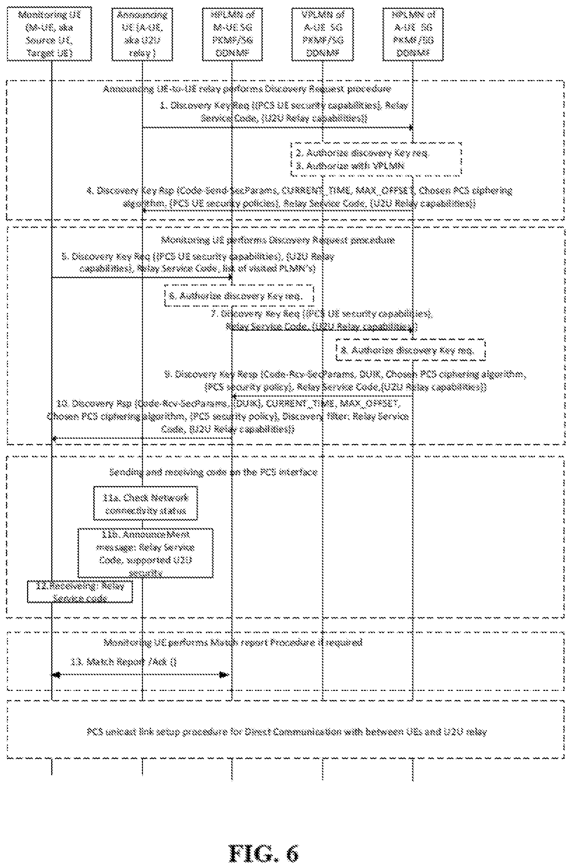

FIG. 6 shows a processing and/or signalling flow for discovery according to embodiments of the disclosed subject matter. The processing and/or signalling flow may be utilized in step 0 and/or step 1 described above with respect to FIG. 5.

1-4. When the 5G ProSe UE-to-UE relay is in the coverage, the UE-to-UE relay sends a Discovery Key Request message to the 5G DDNMF in its HPLMN in order to get the authorization of Relay Service Code to announce and to get the associated security material.

In addition, the UE-to-UE relay shall include its UE-to-UE Relay capability which contains: security methods supported for U2U relay (e.g. network based security, peer to peer based security etc.). it may also contain the role(s) that the (monitoring/announcing) UE can take in U2U relay procedure for the indicated U2U RSC, e.g. as Source UE, as Target UE, as U2U Relay UE, or combination of these roles, supported hops of U2U relay, Layer2 or Layer3 U2U relay,

U2U relay capability is authorized and negotiated during discovery key request procedure.

5-10. When the 5G ProSe source UE or target UE is in the coverage, the UE sends a Discovery Key Request message to the 5G DDNMF in its HPLMN in order to get the authorization of Relay Service Code to announce and to get the associated security material.

In addition, the UE shall include its UE-to-UE Relay capability in the Discovery Key Request.

U2U relay capability is authorized and negotiated during discovery key request procedure.

11. A ProSe 5G UE-to-UE Relay sends out a Relay Announcement message periodically to its proximity, announcing its availability as a UE-to-UE relay.

In the Announcement message, it includes its User Info ID, a Relay Service Code (RSC), a list of UEs that are reachable by the relay, additionally also the available security methods for the U2U relay (e.g. network based security, peer to peer based security etc.).

The 5G ProSe UE-to-UE relay shall check its connectivity status with the network periodically or upon a Solicitation message (discovery message from other UEs). If connectivity with network is available, the UE-to-UE Relay shall include network-based security as security methods available for U2U relay in the announcement message. Otherwise, the UE-to-UE Relay shall remove network-based security from the available security methods for U2U relay in the announcement message.

Additionally, if multiple security methods for U2U relay are available, the UE-to-UE Relay may announce its preference to support a security method, e.g. the available security methods are listed in order.

12. The 5G ProSe (source or target) UE discovers the UE-to-UE Relay.

Based on the available security methods for U2U relay announced by the UE-to-UE relay, the 5G ProSe (source or target) UE decides the security method to be used for PC5 link establishment with the UE-to-UE Relay and perform security establishment procedure with the UE-to-UE relay.

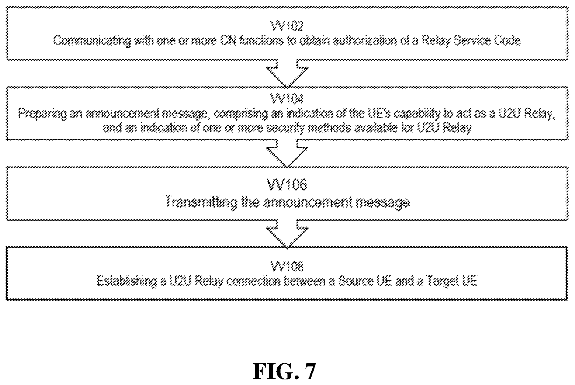

FIG. 7 depicts a method in accordance with some embodiments. The method VV1 may be performed by a UE or wireless device (e.g. the UE QQ112 or UE QQ200 as described later with reference to FIGs. QQ1 and QQ2 respectively). In one embodiment, the UE is configured or configurable as a U2U Relay (e.g., the UE has the capability of acting as the Relay between a Source UE and a Target UE in a U2U Relay connection). The method VV1 may correspond in some respects to the signalling of one or more of the UE-to-UE relay in FIG. 5 and the "Announcing UE (A-UE, aka U2U relay)" in FIG. 6.

The method begins at step VV102, in which the UE communicates with a core network node, e.g., to obtain authorization to act as a relay in a U2U connection.

For example, step VV102 may comprise the UE transmitting a discovery key request message to a core network node and, in response, receiving a relay service code authorizing the UE to act as a relay in a U2U connection. The discovery key request message may further comprise an indication of the UE's capability to act as a relay in a U2U connection.

In some embodiments step VV102 may correspond to step 0 described above with respect to FIG. 5 and/or steps 1 and 4 described above with respect to FIG. 6.

In step VV104, the UE prepares an announcement message for transmission. The announcement message comprises an indication of a capability of the user equipment to act as a relay in a U2U connection and, responsive to a determination that the UE is connected to a radio communication network, an indication that network-based security protocols are available to establish security for the U2U connection. Conversely, the indication that network-based security protocols are available may be omitted from the announcement message responsive to a determination that the UE is not connected to the radio communication network (e.g., is out of coverage).

For example, the UE may determine its connection status to the radio communication network periodically, or upon (e.g., in response to) reception of a discovery message from another UE, e.g., a monitoring UE hoping to establish a U2U connection as a source or target UE.

The announcement message may comprise a list of available security protocols to establish security for the U2U connection, such as the network-based security protocols discussed above (e.g., UP-based or CP-based security establishment procedure) or peer-to-peer based security protocols. The available security protocols may be associated with an order of preference, e.g., through the use of indices or an order of presentation that indicates one security protocol being more preferred than another protocol. For example, network-based security may be preferred to peer-to-peer based security, or vice versa. Within network-based security protocols, UP-based security procedures may be preferred to CP-based security procedures (or vice versa). One or more of the available security protocols may be set as a default., e.g., in previous configuration by a node of the radio communication network, or as specified in a radio technical specification implemented by the UE.

The announcement message may further comprise an indication of the relay service code received in step VV102.

In step VV106, the UE transmits the announcement message. For example, the announcement message may be broadcast to enable discovery of the UE by one or more other UEs (e.g., those UEs in the proximity and able to detect the announcement message), or transmitted in response to reception of a discovery message from another UE.

In some embodiments, steps VV104 and VV106 may correspond to steps 11a and 11b described above with respect to FIG. 6.

In step VV108, the UE establishes a U2U relay connection between a source UE and a target UE. For example, the UE may receive a connection request message from one or more of the source UE and the target UE comprising an indication of a selected security protocol for the establishment of security for the U2U connection. Step VV108 may correspond to step 2 and the following steps described above with respect to FIG. 5.

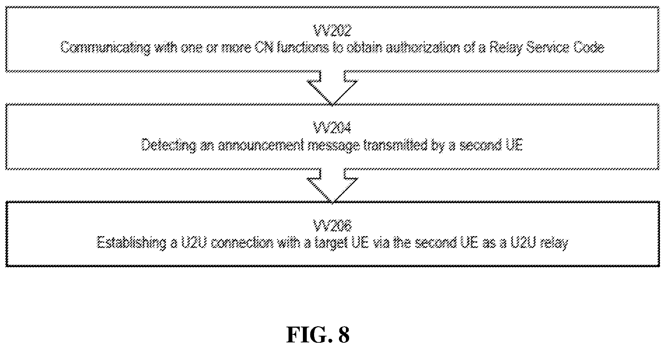

FIG. 8 depicts a method in accordance with particular embodiments. The method VV2 may be performed by a UE or wireless device (e.g. the UE QQ112 or UE QQ200 as described later with reference to FIGs. QQ1 and QQ2 respectively). In one embodiment, the UE is configured or configurable as a Source or Target UE in a U2U Relay connection (e.g., the UE has the capability of acting as the Source UE or Target UE in a U2U Relay connection via a U2U Relay). The method VV2 may correspond in some respects to the signalling of one or more of the Source UE and/or the Target UE in FIG. 5 and the "Monitoring UE (M-UE, aka Source UE, Target UE)" in FIG. 6. The method VV2 may be read in conjunction with method VV1, which in some respects sets out a corresponding method in a U2U Relay.

The method begins at step VV202, in which the UE communicates with a core network node, e.g., to obtain authorization to act as a source UE or a target UE in a U2U connection.

For example, step VV202 may comprise the UE transmitting a discovery key request message to a core network node and, in response, receiving a relay service code authorizing the UE to act as a source UE or a target UE in a U2U connection. The discovery key request message may further comprise an indication of the UE's capability to act as a source UE or a target UE in a U2U connection.

In some embodiments step VV202 may correspond to step 0 described above with respect to FIG. 5 and/or steps 5 and 10 described above with respect to FIG. 6.

In step VV204, the UE detects an announcement message transmitted by a second UE. The announcement message comprises an indication of a capability of the second UE to act as a relay in a U2U connection and, responsive to a determination that the second UE is connected to a radio communication network, an indication that network-based security protocols are available to establish security for the U2U connection.

The announcement message may comprise a list of available security protocols to establish security for the U2U connection, such as the network-based security protocols discussed above (e.g., UP-based or CP-based security establishment procedure) or peer-to-peer based security protocols. The available security protocols may be associated with an order of preference, e.g., through the use of indices or an order of presentation that indicates one security protocol being more preferred than another protocol. For example, network-based security may be preferred to peer-to-peer based security, or vice versa. Within network-based security protocols, UP-based security procedures may be preferred to CP-based security procedures (or vice versa). One or more of the available security protocols may be set as a default., e.g., in previous configuration by a node of the radio communication network, or as specified in a radio technical specification implemented by the UE.

The announcement message may further comprise an indication of a relay service code authorizing the second UE to act as a relay in a U2U connection (e.g., as received in step VV102 of method VV1 described above).

The announcement message may be broadcast to enable discovery of the second UE by one or more other UEs (e.g., the UE performing method VV2), or transmitted in response to reception of a discovery message from the UE performing method VV2 or a different UE.

In some embodiments, step VV204 may correspond to step 12 described above with respect to FIG. 6.

In step VV206, the UE establishes a U2U connection with a target UE via the second UE acting as relay. For example, step VV206 may comprise the UE transmitting a connection request message to the second UE comprising an indication of a selected security protocol for the establishment of security for the U2U connection. Step VV206 may correspond to step 2 and the following steps described above with respect to FIG. 5.

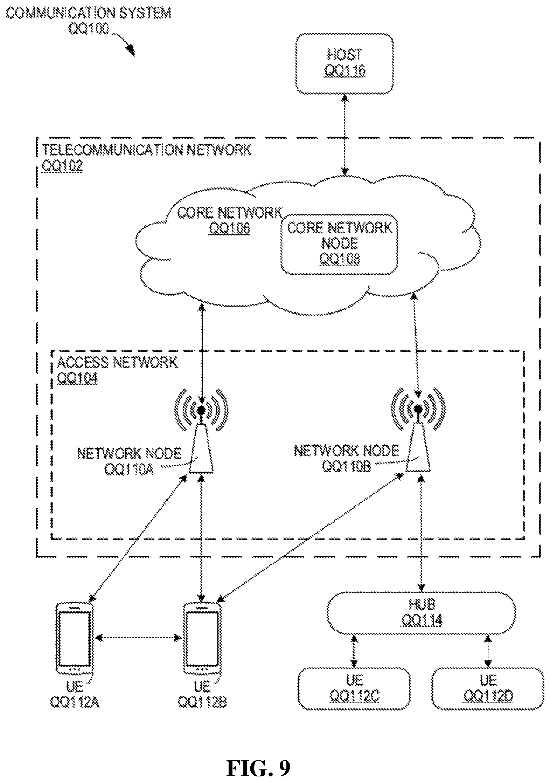

FIG. 9 shows an example of a communication system QQ100 in accordance with some embodiments.

In the example, the communication system QQ100 includes a telecommunication network QQ102 that includes an access network QQ104, such as a radio access network (RAN), and a core network QQ106, which includes one or more core network nodes QQ108. The access network QQ104 includes one or more access network nodes, such as network nodes QQ110a and QQ110b (one or more of which may be generally referred to as network nodes QQ110), or any other similar 3^{rd} Generation Partnership Project (3GPP) access node or non-3GPP access point. The network nodes QQ110 facilitate direct or indirect connection of user equipment (UE), such as by connecting UEs QQ112a, QQ112b, QQ112c, and QQ112d (one or more of which may be generally referred to as UEs QQ112) to the core network QQ106 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system QQ100 may include any number of wired or wireless networks, network nodes, UEs, and/or any other components or systems that may facilitate or participate in the communication of data and/or signals whether via wired or wireless connections. The communication system QQ100 may include and/or interface with any type of communication, telecommunication, data, cellular, radio network, and/or other similar type of system.

The UEs QQ112 may be any of a wide variety of communication devices, including wireless devices arranged, configured, and/or operable to communicate wirelessly with the network nodes QQ110 and other communication devices. Similarly, the network nodes QQ110 are arranged, capable, configured, and/or operable to communicate directly or indirectly with the UEs QQ112 and/or with other network nodes or equipment in the telecommunication network QQ102 to enable and/or provide network access, such as wireless network access, and/or to perform other functions, such as administration in the telecommunication network QQ102.

In the depicted example, the core network QQ106 connects the network nodes QQ110 to one or more hosts, such as host QQ116. These connections may be direct or indirect via one or more intermediary networks or devices. In other examples, network nodes may be directly coupled to hosts. The core network QQ106 includes one more core network nodes (e.g., core network node QQ108) that are structured with hardware and software components. Features of these components may be substantially similar to those described with respect to the UEs, network nodes, and/or hosts, such that the descriptions thereof are generally applicable to the corresponding components of the core network node QQ108. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or a User Plane Function (UPF).

The host QQ116 may be under the ownership or control of a service provider other than an operator or provider of the access network QQ104 and/or the telecommunication network QQ102, and may be operated by the service provider or on behalf of the service provider. The host QQ116 may host a variety of applications to provide one or more services. Examples of such applications include the provision of live and/or pre-recorded audio/video content, data collection services, for example, retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system QQ100 of FIG. 9 enables connectivity between the UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable 2G, 3G, 4G, 5G standards, or any applicable future generation standard (e.g., 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

In some examples, the telecommunication network QQ102 is a cellular network that implements 3GPP standardized features. Accordingly, the telecommunications network QQ102 may support network slicing to provide different logical networks to different devices that are connected to the telecommunication network QQ102. For example, the telecommunications network QQ102 may provide Ultra Reliable Low Latency Communication (URLLC) services to some UEs, while providing Enhanced Mobile Broadband (eMBB) services to other UEs, and/or Massive Machine Type Communication (mMTC)/Massive IoT services to yet further UEs.

In some examples, the UEs QQ112 are configured to transmit and/or receive information without direct human interaction. For instance, a UE may be designed to transmit information to the access network QQ104 on a predetermined schedule, when triggered by an internal or external event, or in response to requests from the access network QQ104. Additionally, a UE may be configured for operating in single- or multi-RAT or multi-standard mode. For example, a UE may operate with any one or combination of Wi-Fi, NR (New Radio) and LTE, i.e. being configured for multi-radio dual connectivity (MR-DC), such as E-UTRAN (Evolved-UMTS Terrestrial Radio Access Network) New Radio - Dual Connectivity (EN-DC).

In the example illustrated in FIG. 9, the hub QQ114 communicates with the access network QQ104 to facilitate indirect communication between one or more UEs (e.g., UE QQ112c and/or QQ112d) and network nodes (e.g., network node QQ110b). In some examples, the hub QQ114 may be a controller, router, a content source and analytics node, or any of the other communication devices described herein regarding UEs. For example, the hub QQ114 may be a broadband router enabling access to the core network QQ106 for the UEs. As another example, the hub QQ114 may be a controller that sends commands or instructions to one or more actuators in the UEs. Commands or instructions may be received from the UEs, network nodes QQ110, or by executable code, script, process, or other instructions in the hub QQ114. As another example, the hub QQ114 may be a data collector that acts as temporary storage for UE data and, in some embodiments, may perform analysis or other processing of the data. As another example, the hub QQ114 may be a content source. For example, for a UE that is a VR headset, display, loudspeaker or other media delivery device, the hub QQ114 may retrieve VR assets, video, audio, or other media or data related to sensory information via a network node, which the hub QQ114 then provides to the UE either directly, after performing local processing, and/or after adding additional local content. In still another example, the hub QQ114 acts as a proxy server or orchestrator for the UEs, in particular in if one or more of the UEs are low energy IoT devices.

The hub QQ114 may have a constant/persistent or intermittent connection to the network node QQ110b. The hub QQ114 may also allow for a different communication scheme and/or schedule between the hub QQ114 and UEs (e.g., UE QQ112c and/or QQ112d), and between the hub QQ114 and the core network QQ106. In other examples, the hub QQ114 is connected to the core network QQ106 and/or one or more UEs via a wired connection. Moreover, the hub QQ114 may be configured to connect to an M2M service provider over the access network QQ104 and/or to another UE over a direct connection. In some scenarios, UEs may establish a wireless connection with the network nodes QQ110 while still connected via the hub QQ114 via a wired or wireless connection. In some embodiments, the hub QQ114 may be a dedicated hub - that is, a hub whose primary function is to route communications to/from the UEs from/to the network node QQ110b. In other embodiments, the hub QQ114 may be a non-dedicated hub - that is, a device which is capable of operating to route communications between the UEs and network node QQ110b, but which is additionally capable of operating as a communication start and/or end point for certain data channels.

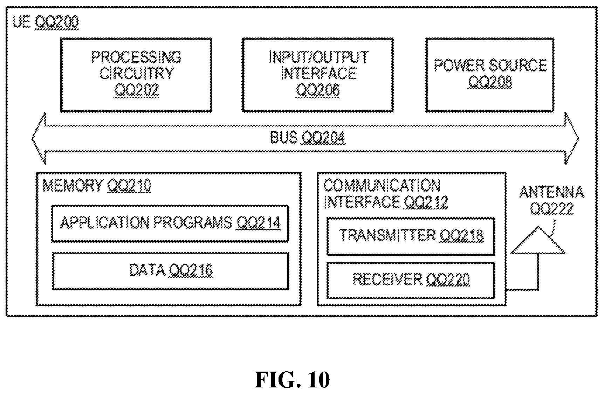

FIG. 10 shows a UE QQ200 in accordance with some embodiments. As used herein, a UE refers to a device capable, configured, arranged and/or operable to communicate wirelessly with network nodes and/or other UEs. Examples of a UE include, but are not limited to, a smart phone, mobile phone, cell phone, voice over IP (VoIP) phone, wireless local loop phone, desktop computer, personal digital assistant (PDA), wireless camera, gaming console or device, music storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle-mounted or vehicle embedded/integrated wireless device, etc. Other examples include any UE identified by the 3rd Generation Partnership Project (3GPP), including a narrow band internet of things (NB-IoT) UE, a machine type communication (MTC) UE, and/or an enhanced MTC (eMTC) UE.

A UE may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

The UE QQ200 includes processing circuitry QQ202 that is operatively coupled via a bus QQ204 to an input/output interface QQ206, a power source QQ208, a memory QQ210, a communication interface QQ212, and/or any other component, or any combination thereof. Certain UEs may utilize all or a subset of the components shown in FIG. 10. The level of integration between the components may vary from one UE to another UE. Further, certain UEs may contain multiple instances of a component, such as multiple processors, memories, transceivers, transmitters, receivers, etc.

The processing circuitry QQ202 is configured to process instructions and data and may be configured to implement any sequential state machine operative to execute instructions stored as machine-readable computer programs in the memory QQ210. The processing circuitry QQ202 may be implemented as one or more hardware-implemented state machines (e.g., in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, the processing circuitry QQ202 may include multiple central processing units (CPUs). The processing circuitry QQ202 may be operable to provide, either alone or in conjunction with other UE QQ200 components, such as the memory QQ210, UE QQ200 functionality. For example, the processing circuitry QQ202 may be configured to cause the UE QQ202 to perform the methods as described with reference to one or more of FIGs. VV1 and VV2.

In the example, the input/output interface QQ206 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE QQ200. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source QQ208 is structured as a battery or battery pack. Other types of power sources, such as an external power source (e.g., an electricity outlet), photovoltaic device, or power cell, may be used. The power source QQ208 may further include power circuitry for delivering power from the power source QQ208 itself, and/or an external power source, to the various parts of the UE QQ200 via input circuitry or an interface such as an electrical power cable. Delivering power may be, for example, for charging of the power source QQ208. Power circuitry may perform any formatting, converting, or other modification to the power from the power source QQ208 to make the power suitable for the respective components of the UE QQ200 to which power is supplied.

The memory QQ210 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, the memory QQ210 includes one or more application programs QQ214, such as an operating system, web browser application, a widget, gadget engine, or other application, and corresponding data QQ216. The memory QQ210 may store, for use by the UE QQ200, any of a variety of various operating systems or combinations of operating systems.

The memory QQ210 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card.' The memory QQ210 may allow the UE QQ200 to access instructions, application programs and the like, stored on transitory or non-transitory memory media, to off-load data, or to upload data. An article of manufacture, such as one utilizing a communication system may be tangibly embodied as or in the memory QQ210, which may be or comprise a device-readable storage medium.

The processing circuitry QQ202 may be configured to communicate with an access network or other network using the communication interface QQ212. The communication interface QQ212 may comprise one or more communication subsystems and may include or be communicatively coupled to an antenna QQ222. The communication interface QQ212 may include one or more transceivers used to communicate, such as by communicating with one or more remote transceivers of another device capable of wireless communication (e.g., another UE or a network node in an access network). Each transceiver may include a transmitter QQ218 and/or a receiver QQ220 appropriate to provide network communications (e.g., optical, electrical, frequency allocations, and so forth). Moreover, the transmitter QQ218 and receiver QQ220 may be coupled to one or more antennas (e.g., antenna QQ222) and may share circuit components, software or firmware, or alternatively be implemented separately.

In some embodiments, communication functions of the communication interface QQ212 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

Regardless of the type of sensor, a UE may provide an output of data captured by its sensors, through its communication interface QQ212, via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, a UE comprises an actuator, a motor, or a switch, related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or controls a robotic arm performing a medical procedure according to the received input.

A UE, when in the form of an Internet of Things (IoT) device, may be a device for use in one or more application domains, these domains comprising, but not limited to, city wearable technology, extended industrial application and healthcare. Non-limiting examples of such an IoT device are devices which are or which are embedded in: a connected refrigerator or freezer, a TV, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or Virtual Reality (VR), a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence on the intended application of the IoT device in addition to other components as described in relation to the UE QQ200 shown in FIG. 10.

As yet another specific example, in an IoT scenario, a UE may represent a machine or other device that performs monitoring and/or measurements, and transmits the results of such monitoring and/or measurements to another UE and/or a network node. The UE may in this case be an M2M device, which may in a 3GPP context be referred to as an MTC device. As one particular example, the UE may implement the 3GPP NB-IoT standard. In other scenarios, a UE may represent a vehicle, such as a car, a bus, a truck, a ship and an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g. by controlling an actuator) to increase or decrease the drone's speed. The first and/or the second UE can also include more than one of the functionalities described above. For example, a UE might comprise the sensor and the actuator, and handle communication of data for both the speed sensor and the actuators.

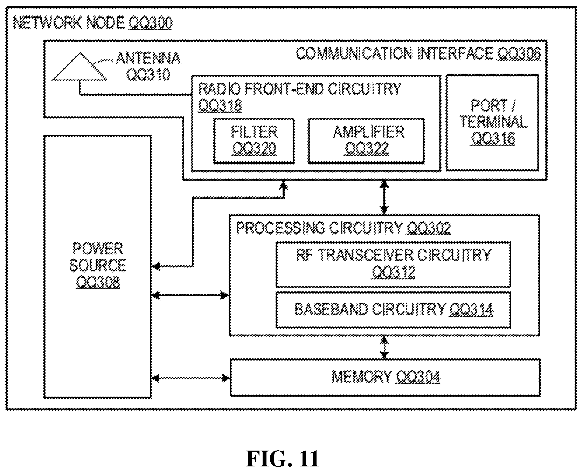

FIG. 11 shows a network node QQ300 in accordance with some embodiments. As used herein, network node refers to equipment capable, configured, arranged and/or operable to communicate directly or indirectly with a UE and/or with other network nodes or equipment, in a telecommunication network. Examples of network nodes include, but are not limited to, access points (APs) (e.g., radio access points), base stations (BSs) (e.g., radio base stations, Node Bs, evolved Node Bs (eNBs) and NR NodeBs (gNBs)).

Base stations may be categorized based on the amount of coverage they provide (or, stated differently, their transmit power level) and so, depending on the provided amount of coverage, may be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS).

Other examples of network nodes include multiple transmission point (multi-TRP) 5G access nodes, multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node QQ300 includes processing circuitry QQ302, a memory QQ304, a communication interface QQ306, and a power source QQ308, and/or any other component, or any combination thereof. The network node QQ300 may be composed of multiple physically separate components (e.g., a NodeB component and a RNC component, or a BTS component and a BSC component, etc.), which may each have their own respective components. In certain scenarios in which the network node QQ300 comprises multiple separate components (e.g., BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, the network node QQ300 may be configured to support multiple radio access technologies (RATs). In such embodiments, some components may be duplicated (e.g., separate memory QQ304 for different RATs) and some components may be reused (e.g., a same antenna QQ310 may be shared by different RATs). The network node QQ300 may also include multiple sets of the various illustrated components for different wireless technologies integrated into network node QQ300, for example GSM, WCDMA, LTE, NR, WiFi, Zigbee, Z-wave, LoRaWAN, Radio Frequency Identification (RFID) or Bluetooth wireless technologies. These wireless technologies may be integrated into the same or different chip or set of chips and other components within network node QQ300.

The processing circuitry QQ302 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node QQ300 components, such as the memory QQ304, network node QQ300 functionality.

In some embodiments, the processing circuitry QQ302 includes a system on a chip (SOC). In some embodiments, the processing circuitry QQ302 includes one or more of radio frequency (RF) transceiver circuitry QQ312 and baseband processing circuitry QQ314. In some embodiments, the radio frequency (RF) transceiver circuitry QQ312 and the baseband processing circuitry QQ314 may be on separate chips (or sets of chips), boards, or units, such as radio units and digital units. In alternative embodiments, part or all of RF transceiver circuitry QQ312 and baseband processing circuitry QQ314 may be on the same chip or set of chips, boards, or units.

The memory QQ304 may comprise any form of volatile or non-volatile computer-readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device-readable and/or computer-executable memory devices that store information, data, and/or instructions that may be used by the processing circuitry QQ302. The memory QQ304 may store any suitable instructions, data, or information, including a computer program, software, an application including one or more of logic, rules, code, tables, and/or other instructions capable of being executed by the processing circuitry QQ302 and utilized by the network node QQ300. The memory QQ304 may be used to store any calculations made by the processing circuitry QQ302 and/or any data received via the communication interface QQ306. In some embodiments, the processing circuitry QQ302 and memory QQ304 is integrated.

The communication interface QQ306 is used in wired or wireless communication of signaling and/or data between a network node, access network, and/or UE. As illustrated, the communication interface QQ306 comprises port(s)/terminal(s) QQ316 to send and receive data, for example to and from a network over a wired connection. The communication interface QQ306 also includes radio front-end circuitry QQ318 that may be coupled to, or in certain embodiments a part of, the antenna QQ310. Radio front-end circuitry QQ318 comprises filters QQ320 and amplifiers QQ322. The radio front-end circuitry QQ318 may be connected to an antenna QQ310 and processing circuitry QQ302. The radio front-end circuitry may be configured to condition signals communicated between antenna QQ310 and processing circuitry QQ302. The radio front-end circuitry QQ318 may receive digital data that is to be sent out to other network nodes or UEs via a wireless connection. The radio front-end circuitry QQ318 may convert the digital data into a radio signal having the appropriate channel and bandwidth parameters using a combination of filters QQ320 and/or amplifiers QQ322. The radio signal may then be transmitted via the antenna QQ310. Similarly, when receiving data, the antenna QQ310 may collect radio signals which are then converted into digital data by the radio front-end circuitry QQ318. The digital data may be passed to the processing circuitry QQ302. In other embodiments, the communication interface may comprise different components and/or different combinations of components.

In certain alternative embodiments, the network node QQ300 does not include separate radio front-end circuitry QQ318, instead, the processing circuitry QQ302 includes radio front-end circuitry and is connected to the antenna QQ310. Similarly, in some embodiments, all or some of the RF transceiver circuitry QQ312 is part of the communication interface QQ306. In still other embodiments, the communication interface QQ306 includes one or more ports or terminals QQ316, the radio front-end circuitry QQ318, and the RF transceiver circuitry QQ312, as part of a radio unit (not shown), and the communication interface QQ306 communicates with the baseband processing circuitry QQ314, which is part of a digital unit (not shown).

The antenna QQ310 may include one or more antennas, or antenna arrays, configured to send and/or receive wireless signals. The antenna QQ310 may be coupled to the radio front-end circuitry QQ318 and may be any type of antenna capable of transmitting and receiving data and/or signals wirelessly. In certain embodiments, the antenna QQ310 is separate from the network node QQ300 and connectable to the network node QQ300 through an interface or port.

The antenna QQ310, communication interface QQ306, and/or the processing circuitry QQ302 may be configured to perform any receiving operations and/or certain obtaining operations described herein as being performed by the network node. Any information, data and/or signals may be received from a UE, another network node and/or any other network equipment. Similarly, the antenna QQ310, the communication interface QQ306, and/or the processing circuitry QQ302 may be configured to perform any transmitting operations described herein as being performed by the network node. Any information, data and/or signals may be transmitted to a UE, another network node and/or any other network equipment.

The power source QQ308 provides power to the various components of network node QQ300 in a form suitable for the respective components (e.g., at a voltage and current level needed for each respective component). The power source QQ308 may further comprise, or be coupled to, power management circuitry to supply the components of the network node QQ300 with power for performing the functionality described herein. For example, the network node QQ300 may be connectable to an external power source (e.g., the power grid, an electricity outlet) via an input circuitry or interface such as an electrical cable, whereby the external power source supplies power to power circuitry of the power source QQ308. As a further example, the power source QQ308 may comprise a source of power in the form of a battery or battery pack which is connected to, or integrated in, power circuitry. The battery may provide backup power should the external power source fail.

Embodiments of the network node QQ300 may include additional components beyond those shown in FIG. 11 for providing certain aspects of the network node's functionality, including any of the functionality described herein and/or any functionality necessary to support the subject matter described herein. For example, the network node QQ300 may include user interface equipment to allow input of information into the network node QQ300 and to allow output of information from the network node QQ300. This may allow a user to perform diagnostic, maintenance, repair, and other administrative functions for the network node QQ300.

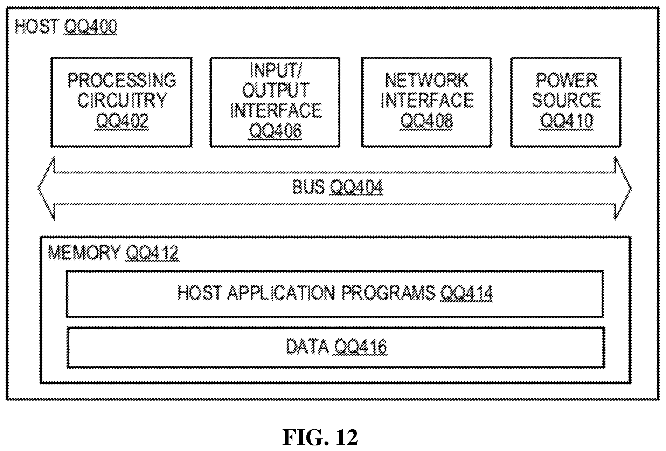

FIG. 12 is a block diagram of a host QQ400, which may be an embodiment of the host QQ116 of FIG. 9, in accordance with various aspects described herein. As used herein, the host QQ400 may be or comprise various combinations hardware and/or software, including a standalone server, a blade server, a cloud-implemented server, a distributed server, a virtual machine, container, or processing resources in a server farm. The host QQ400 may provide one or more services to one or more UEs.

The host QQ400 includes processing circuitry QQ402 that is operatively coupled via a bus QQ404 to an input/output interface QQ406, a network interface QQ408, a power source QQ410, and a memory QQ412. Other components may be included in other embodiments. Features of these components may be substantially similar to those described with respect to the devices of previous figures, such as FIGs. QQ2 and QQ3, such that the descriptions thereof are generally applicable to the corresponding components of host QQ400.

The memory QQ412 may include one or more computer programs including one or more host application programs QQ414 and data QQ416, which may include user data, e.g., data generated by a UE for the host QQ400 or data generated by the host QQ400 for a UE. Embodiments of the host QQ400 may utilize only a subset or all of the components shown. The host application programs QQ414 may be implemented in a container-based architecture and may provide support for video codecs (e.g., Versatile Video Coding (VVC), High Efficiency Video Coding (HEVC), Advanced Video Coding (AVC), MPEG, VP9) and audio codecs (e.g., FLAC, Advanced Audio Coding (AAC), MPEG, G.711), including transcoding for multiple different classes, types, or implementations of UEs (e.g., handsets, desktop computers, wearable display systems, heads-up display systems). The host application programs QQ414 may also provide for user authentication and licensing checks and may periodically report health, routes, and content availability to a central node, such as a device in or on the edge of a core network. Accordingly, the host QQ400 may select and/or indicate a different host for over-the-top services for a UE. The host application programs QQ414 may support various protocols, such as the HTTP Live Streaming (HLS) protocol, Real-Time Messaging Protocol (RTMP), Real-Time Streaming Protocol (RTSP), Dynamic Adaptive Streaming over HTTP (MPEG-DASH), etc.

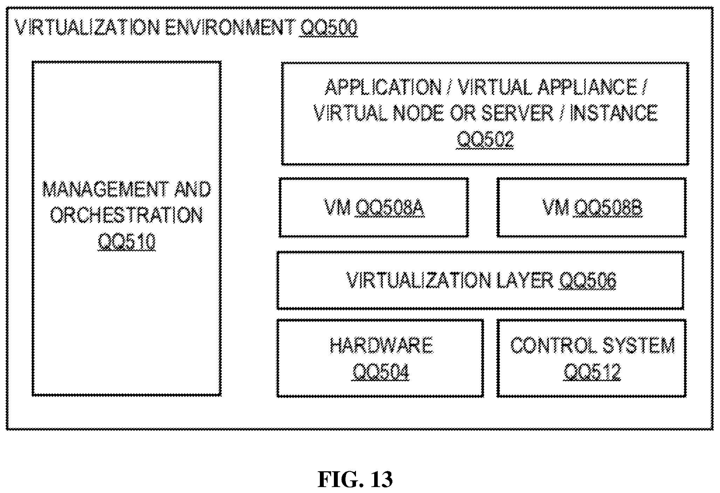

FIG. 13 is a block diagram illustrating a virtualization environment QQ500 in which functions implemented by some embodiments may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments QQ500 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications QQ502 (which may alternatively be called software instances, virtual appliances, network functions, virtual nodes, virtual network functions, etc.) are run in the virtualization environment Q400 to implement some of the features, functions, and/or benefits of some of the embodiments disclosed herein.

Hardware QQ504 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers QQ506 (also referred to as hypervisors or virtual machine monitors (VMMs)), provide VMs QQ508a and QQ508b (one or more of which may be generally referred to as VMs QQ508), and/or perform any of the functions, features and/or benefits described in relation with some embodiments described herein. The virtualization layer QQ506 may present a virtual operating platform that appears like networking hardware to the VMs QQ508.

The VMs QQ508 comprise virtual processing, virtual memory, virtual networking or interface and virtual storage, and may be run by a corresponding virtualization layer QQ506. Different embodiments of the instance of a virtual appliance QQ502 may be implemented on one or more of VMs QQ508, and the implementations may be made in different ways. Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, a VM QQ508 may be a software implementation of a physical machine that runs programs as if they were executing on a physical, non-virtualized machine. Each of the VMs QQ508, and that part of hardware QQ504 that executes that VM, be it hardware dedicated to that VM and/or hardware shared by that VM with others of the VMs, forms separate virtual network elements. Still in the context of NFV, a virtual network function is responsible for handling specific network functions that run in one or more VMs QQ508 on top of the hardware QQ504 and corresponds to the application QQ502.

Hardware QQ504 may be implemented in a standalone network node with generic or specific components. Hardware QQ504 may implement some functions via virtualization. Alternatively, hardware QQ504 may be part of a larger cluster of hardware (e.g. such as in a data center or CPE) where many hardware nodes work together and are managed via management and orchestration QQ510, which, among others, oversees lifecycle management of applications QQ502. In some embodiments, hardware QQ504 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signaling can be provided with the use of a control system QQ512 which may alternatively be used for communication between hardware nodes and radio units.

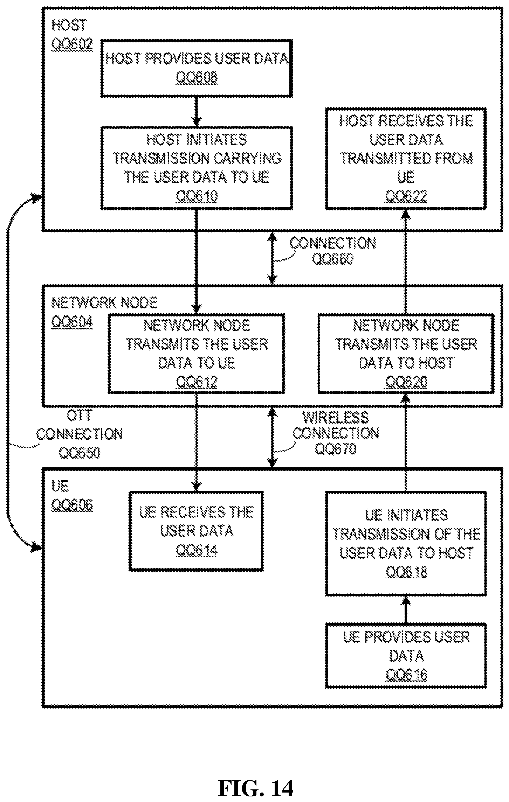

FIG. 14 shows a communication diagram of a host QQ602 communicating via a network node QQ604 with a UE QQ606 over a partially wireless connection in accordance with some embodiments. Example implementations, in accordance with various embodiments, of the UE (such as a UE QQ112a of FIG. 9 and/or UE QQ200 of FIG. 10), network node (such as network node QQ110a of FIG. 9 and/or network node QQ300 of FIG. 11), and host (such as host QQ116 of FIG. 9 and/or host QQ400 of FIG. 12) discussed in the preceding paragraphs will now be described with reference to FIG. 14.

Like host QQ400, embodiments of host QQ602 include hardware, such as a communication interface, processing circuitry, and memory. The host QQ602 also includes software, which is stored in or accessible by the host QQ602 and executable by the processing circuitry. The software includes a host application that may be operable to provide a service to a remote user, such as the UE QQ606 connecting via an over-the-top (OTT) connection QQ650 extending between the UE QQ606 and host QQ602. In providing the service to the remote user, a host application may provide user data which is transmitted using the OTT connection QQ650.

The network node QQ604 includes hardware enabling it to communicate with the host QQ602 and UE QQ606. The connection QQ660 may be direct or pass through a core network (like core network QQ106 of FIG. 9) and/or one or more other intermediate networks, such as one or more public, private, or hosted networks. For example, an intermediate network may be a backbone network or the Internet.

The UE QQ606 includes hardware and software, which is stored in or accessible by UE QQ606 and executable by the UE's processing circuitry. The software includes a client application, such as a web browser or operator-specific "app" that may be operable to provide a service to a human or non-human user via UE QQ606 with the support of the host QQ602. In the host QQ602, an executing host application may communicate with the executing client application via the OTT connection QQ650 terminating at the UE QQ606 and host QQ602. In providing the service to the user, the UE's client application may receive request data from the host's host application and provide user data in response to the request data. The OTT connection QQ650 may transfer both the request data and the user data. The UE's client application may interact with the user to generate the user data that it provides to the host application through the OTT connection QQ650.

The OTT connection QQ650 may extend via a connection QQ660 between the host QQ602 and the network node QQ604 and via a wireless connection QQ670 between the network node QQ604 and the UE QQ606 to provide the connection between the host QQ602 and the UE QQ606. The connection QQ660 and wireless connection QQ670, over which the OTT connection QQ650 may be provided, have been drawn abstractly to illustrate the communication between the host QQ602 and the UE QQ606 via the network node QQ604, without explicit reference to any intermediary devices and the precise routing of messages via these devices.

As an example of transmitting data via the OTT connection QQ650, in step QQ608, the host QQ602 provides user data, which may be performed by executing a host application. In some embodiments, the user data is associated with a particular human user interacting with the UE QQ606. In other embodiments, the user data is associated with a UE QQ606 that shares data with the host QQ602 without explicit human interaction. In step QQ610, the host QQ602 initiates a transmission carrying the user data towards the UE QQ606. The host QQ602 may initiate the transmission responsive to a request transmitted by the UE QQ606. The request may be caused by human interaction with the UE QQ606 or by operation of the client application executing on the UE QQ606. The transmission may pass via the network node QQ604, in accordance with the teachings of the embodiments described throughout this disclosure. Accordingly, in step QQ612, the network node QQ604 transmits to the UE QQ606 the user data that was carried in the transmission that the host QQ602 initiated, in accordance with the teachings of the embodiments described throughout this disclosure. In step QQ614, the UE QQ606 receives the user data carried in the transmission, which may be performed by a client application executed on the UE QQ606 associated with the host application executed by the host QQ602.

In some examples, the UE QQ606 executes a client application which provides user data to the host QQ602. The user data may be provided in reaction or response to the data received from the host QQ602. Accordingly, in step QQ616, the UE QQ606 may provide user data, which may be performed by executing the client application. In providing the user data, the client application may further consider user input received from the user via an input/output interface of the UE QQ606. Regardless of the specific manner in which the user data was provided, the UE QQ606 initiates, in step QQ618, transmission of the user data towards the host QQ602 via the network node QQ604. In step QQ620, in accordance with the teachings of the embodiments described throughout this disclosure, the network node QQ604 receives user data from the UE QQ606 and initiates transmission of the received user data towards the host QQ602. In step QQ622, the host QQ602 receives the user data carried in the transmission initiated by the UE QQ606.

One or more of the various embodiments improve the performance of OTT services provided to the UE QQ606 using the OTT connection QQ650, in which the wireless connection QQ670 forms the last segment. More precisely, the teachings of these embodiments may improve the security of the connection.

In an example scenario, factory status information may be collected and analyzed by the host QQ602. As another example, the host QQ602 may process audio and video data which may have been retrieved from a UE for use in creating maps. As another example, the host QQ602 may collect and analyze real-time data to assist in controlling vehicle congestion (e.g., controlling traffic lights). As another example, the host QQ602 may store surveillance video uploaded by a UE. As another example, the host QQ602 may store or control access to media content such as video, audio, VR or AR which it can broadcast, multicast or unicast to UEs. As other examples, the host QQ602 may be used for energy pricing, remote control of non-time critical electrical load to balance power generation needs, location services, presentation services (such as compiling diagrams etc. from data collected from remote devices), or any other function of collecting, retrieving, storing, analyzing and/or transmitting data.

In some examples, a measurement procedure may be provided for the purpose of monitoring data rate, latency and other factors on which the one or more embodiments improve. There may further be an optional network functionality for reconfiguring the OTT connection QQ650 between the host QQ602 and UE QQ606, in response to variations in the measurement results. The measurement procedure and/or the network functionality for reconfiguring the OTT connection may be implemented in software and hardware of the host QQ602 and/or UE QQ606. In some embodiments, sensors (not shown) may be deployed in or in association with other devices through which the OTT connection QQ650 passes; the sensors may participate in the measurement procedure by supplying values of the monitored quantities exemplified above, or supplying values of other physical quantities from which software may compute or estimate the monitored quantities. The reconfiguring of the OTT connection QQ650 may include message format, retransmission settings, preferred routing etc.; the reconfiguring need not directly alter the operation of the network node QQ604. Such procedures and functionalities may be known and practiced in the art. In certain embodiments, measurements may involve proprietary UE signaling that facilitates measurements of throughput, propagation times, latency and the like, by the host QQ602. The measurements may be implemented in that software causes messages to be transmitted, in particular empty or 'dummy' messages, using the OTT connection QQ650 while monitoring propagation times, errors, etc.

Although the computing devices described herein (e.g., UEs, network nodes, hosts) may include the illustrated combination of hardware components, other embodiments may comprise computing devices with different combinations of components. It is to be understood that these computing devices may comprise any suitable combination of hardware and/or software needed to perform the tasks, features, functions and methods disclosed herein. Determining, calculating, obtaining or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box, or nested within multiple boxes, in practice, computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored on in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hard-wired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole, and/or by end users and a wireless network generally.

## Claims

1. A method performed by a user equipment, UE, comprising:
preparing an announcement message for transmission, the announcement message comprising (a) an indication of a capability of the user equipment to act as a relay in a UE-to-UE, U2U, connection, and (b) responsive to a determination that the UE is connected to a radio communication network, an indication that network-based security protocols are available to establish security for the U2U connection; and
transmitting the announcement message.

2. The method of claim 1, wherein the UE determines its connection status to the radio communication network periodically or upon reception of a discovery message from another UE.

3. The method of any one of the preceding embodiments, wherein the indication that network-based security protocols are available is omitted from the announcement message responsive to a determination that the UE is not connected to the radio communication network.

4. The method of any one of the preceding embodiments, wherein the indication that network-based security protocols are available is contained within a list of available security protocols to establish security for the U2U connection.

5. The method of claim 4, wherein the list of available security protocols comprises an indication of an order of preference of the available security protocols to establish security for the U2U connection.

6. The method of claim 4 or 5, wherein the available security protocols to establish security for the U2U connection comprise one or more peer-to-peer based security protocols.

7. The method of any one of the preceding embodiments, wherein the announcement message is broadcast to enable discovery of the UE by one or more other UEs, or wherein the announcement message is transmitted in response to reception of a discovery message from another UE.

8. The method of any one of the preceding embodiments, further comprising transmitting a discovery key request message to a core network node and, in response, receiving a relay service code authorizing the UE to act as a relay in a U2U connection.

9. The method of claim 8, wherein the announcement message comprises an indication of the relay service code.

10. The method of claim 8 or 9, wherein the discovery key request message further comprises an indication of the UE's capability to act as a relay in a U2U connection.

11. The method of any one of the preceding embodiments, further comprising establishing a U2U connection with a source UE and a target UE.

12. The method of claim 11, wherein establishing the U2U connection comprises receiving a connection request message from one or more of the source UE and the target UE comprising an indication of a selected security protocol for the establishment of security for the U2U connection.

13. A method performed by a first user equipment, UE, comprising:
detecting an announcement message transmitted by a second UE, the announcement message comprising an indication of a capability of the second UE to act as a relay in a U2U connection and, responsive to a determination that the second UE is connected to a radio communication network, an indication that network-based security protocols are available to establish security for the U2U connection; and
establishing a U2U connection with a target UE via the second UE acting as relay.

14. The method of claim 13, wherein establishing the U2U connection comprises transmitting a connection request message to the second UE comprising an indication of a selected security protocol for the establishment of security for the U2U connection.

15. The method of any one of claims 13 or 14, wherein the indication that network-based security protocols are available is contained within a list of available security protocols to establish security for the U2U connection.

16. The method of claim 15, wherein the list of available security protocols comprises an indication of an order of preference of the available security protocols to establish security for the U2U connection.

17. The method of claim 15 or 16, wherein the available security protocols to establish security for the U2U connection comprise one or more peer-to-peer based security protocols.

18. The method of any one of claims 13 to 17, wherein the announcement message is broadcast by the second UE to enable discovery of the second UE, or further comprising transmitting a discovery message and receiving, in response, the announcement message from the second UE.

19. The method of any one of claims 13 to 18, further comprising transmitting a discovery key request message to a core network node and, in response, receiving a relay service code authorizing the first UE to act as a source or target UE in a U2U connection.

20. The method of claim 19, wherein the discovery key request message further comprises an indication of the first UE's capability to act as a source or target UE in a U2U connection.

21. A user equipment configured to perform a method according to any of claims 1 -12, or a user equipment configured to perform a method according to any of claims 13-20.

## Patentansprüche

1. Verfahren, das durch eine Benutzereinrichtung, UE, durchgeführt wird, umfassend:
Vorbereiten einer Ankündigungsnachricht zur Übertragung, wobei die Ankündigungsnachricht (a) eine Angabe einer Fähigkeit der Benutzereinrichtung, als ein Relay in einer UE-zu- UE-, U2U-, Verbindung zu fungieren, und (b) als Reaktion auf eine Feststellung, dass die UE mit einem Funkkommunikationsnetz verbunden ist, eine Angabe, dass netzbasierte Sicherheitsprotokolle zum Herstellen von Sicherheit für die U2U-Verbindung verfügbar sind, umfasst; und
Übertragen der Ankündigungsnachricht.

2. Verfahren nach Anspruch 1, wobei die UE ihren Verbindungsstatus zu dem Funkkommunikationsnetz periodisch oder nach Empfang einer Entdeckungsnachricht von einer anderen UE feststellt.

3. Verfahren nach einem der vorhergehenden Ausführungsformen, wobei die Angabe, dass netzbasierte Sicherheitsprotokolle verfügbar sind, in der Ankündigungsnachricht als Reaktion auf eine Feststellung, dass die UE nicht mit dem Funkkommunikationsnetz verbunden ist, weggelassen wird.

4. Verfahren nach einem der vorhergehenden Ausführungsformen, wobei die Angabe, dass netzbasierte Sicherheitsprotokolle verfügbar sind, in einer Liste von verfügbaren Sicherheitsprotokollen zum Herstellen von Sicherheit für die U2U-Verbindung enthalten ist.

5. Verfahren nach Anspruch 4, wobei die Liste von verfügbaren Sicherheitsprotokollen eine Angabe einer Präferenzreihenfolge der verfügbaren Sicherheitsprotokolle zum Herstellen von Sicherheit für die U2U-Verbindung umfasst.

6. Verfahren nach Anspruch 4 oder 5, wobei die verfügbaren Sicherheitsprotokolle zum Herstellen von Sicherheit für die U2U-Verbindung ein oder mehrere Peer-to-Peer-basierte Sicherheitsprotokolle umfassen.

7. Verfahren nach einem der vorhergehenden Ausführungsformen, wobei die Ankündigungsnachricht per Rundruf gesendet wird, um eine Entdeckung der UE durch eine oder mehrere andere UEs zu ermöglichen, oder wobei die Ankündigungsnachricht als Reaktion auf den Empfang einer Entdeckungsnachricht von einer anderen UE übertragen wird.

8. Verfahren nach einem der vorhergehenden Ausführungsformen, ferner umfassend Übertragen einer Nachricht zur Anforderung des Entdeckungsschlüssels an einen Kernnetzknoten und, als Reaktion darauf, Empfangen eines Relay-Dienstcodes, der die UE autorisiert, als ein Relay in einer U2U-Verbindung zu fungieren.

9. Verfahren nach Anspruch 8, wobei die Ankündigungsnachricht eine Angabe des Relay-Dienstcodes umfasst.

10. Verfahren nach Anspruch 8 oder 9, wobei die Nachricht zur Anforderung des Entdeckungsschlüssels ferner eine Angabe zu der Fähigkeit der UE, als ein Relay in einer U2U-Verbindung zu fungieren, umfasst.

11. Verfahren nach einem der vorhergehenden Ausführungsformen, ferner umfassend Herstellen einer U2U-Verbindung mit einer Quell-UE und einer Ziel-UE.

12. Verfahren nach Anspruch 11, wobei das Herstellen der U2U-Verbindung Empfangen einer Verbindungsanforderungsnachricht von einer oder mehreren der Quell-UE und der Ziel-UE umfasst, die eine Angabe eines ausgewählten Sicherheitsprotokolls zum Herstellen von Sicherheit für die U2U-Verbindung umfasst.

13. Verfahren, das durch eine erste Benutzereinrichtung, UE, durchgeführt wird, umfassend:
Erkennen einer durch eine zweite UE übertragenen Ankündigungsnachricht, wobei die Ankündigungsnachricht eine Angabe einer Fähigkeit der zweiten UE, als ein Relay in einer U2U-Verbindung zu fungieren, und, als Reaktion auf eine Feststellung, dass die zweite UE mit einem Funkkommunikationsnetz verbunden ist, eine Angabe, dass netzbasierte Sicherheitsprotokolle zum Herstellen von Sicherheit für die U2U-Verbindung verfügbar sind, umfasst; und
Herstellen einer U2U-Verbindung mit einer Ziel-UE über die zweite UE, die als Relay fungiert.

14. Verfahren nach Anspruch 13, wobei das Herstellen der U2U-Verbindung Übertragen einer Verbindungsanforderungsnachricht an die zweite UE umfasst, die eine Angabe eines ausgewählten Sicherheitsprotokolls zum Herstellen von Sicherheit für die U2U-Verbindung umfasst.

15. Verfahren nach einem der Ansprüche 13 oder 14, wobei die Angabe, dass netzbasierte Sicherheitsprotokolle verfügbar sind, in einer Liste von verfügbaren Sicherheitsprotokollen zum Herstellen von Sicherheit für die U2U-Verbindung enthalten ist.

16. Verfahren nach Anspruch 15, wobei die Liste von verfügbaren Sicherheitsprotokollen eine Angabe einer Präferenzreihenfolge der verfügbaren Sicherheitsprotokolle zum Herstellen von Sicherheit für die U2U-Verbindung umfasst.

17. Verfahren nach Anspruch 15 oder 16, wobei die verfügbaren Sicherheitsprotokolle zum Herstellen von Sicherheit für die U2U-Verbindung ein oder mehrere Peer-to-Peer-basierte Sicherheitsprotokolle umfassen.

18. Verfahren nach einem der Ansprüche 13 bis 17, wobei die Ankündigungsnachricht per Rundruf durch die zweite UE gesendet wird, um eine Entdeckung der zweiten UE zu ermöglichen, oder ferner umfassend Übertragen einer Entdeckungsnachricht und Empfangen, als Reaktion darauf, der Ankündigungsnachricht von der zweiten UE.

19. Verfahren nach einem der Ansprüche 13 bis 18, ferner umfassend Übertragen einer Nachricht zur Anforderung des Entdeckungsschlüssels an einen Kernnetzknoten und, als Reaktion darauf, Empfangen eines Relay-Dienstcodes, der die erste UE autorisiert, als eine Quell- oder Ziel-UE in einer U2U-Verbindung zu fungieren.

20. Verfahren nach Anspruch 19, wobei die Nachricht zur Anforderung des Entdeckungsschlüssels ferner eine Angabe der Fähigkeit der ersten UE, als eine Quell- oder Ziel-UE in einer U2U-Verbindung zu fungieren, umfasst.

21. Benutzereinrichtung, die dazu konfiguriert ist, ein Verfahren nach einem der Ansprüche 1-12 durchzuführen, oder eine Benutzereinrichtung, die dazu konfiguriert ist, ein Verfahren nach einem der Ansprüche 13-20 durchzuführen.

## Revendications

1. Procédé réalisé au moyen d'un équipement d'utilisateur, UE, comprenant :
la préparation d'un message d'annonce en vue d'une transmission, le message d'annonce comprenant (a) une indication d'une capacité de l'équipement d'utilisateur à agir en tant que relais dans une connexion d'UE à UE, U2U, et (b) en réponse à une détermination du fait que l'UE est connecté à un réseau de communication radio, une indication du fait que des protocoles de sécurité basés sur le réseau sont disponibles pour établir la sécurité de la connexion U2U ; et
la transmission du message d'annonce.

2. Procédé selon la revendication 1, dans lequel l'UE détermine son état de connexion au réseau de communication radio périodiquement ou lors de la réception d'un message de découverte en provenance d'un autre UE.

3. Procédé selon l'un quelconque des modes de réalisation précédents, dans lequel l'indication du fait que des protocoles de sécurité basés sur le réseau sont disponibles est omise du message d'annonce en réponse à une détermination du fait que l'UE n'est pas connecté au réseau de communication radio.

4. Procédé selon l'un quelconque des modes de réalisation précédents, dans lequel l'indication du fait que des protocoles de sécurité basés sur le réseau sont disponibles est contenue dans une liste de protocoles de sécurité disponibles pour établir la sécurité de la connexion U2U.

5. Procédé selon la revendication 4, dans lequel la liste de protocoles de sécurité disponibles comprend une indication d'un ordre de préférence des protocoles de sécurité disponibles pour établir la sécurité de la connexion U2U.

6. Procédé selon la revendication 4 ou 5, dans lequel les protocoles de sécurité disponibles pour établir la sécurité de la connexion U2U comprennent un ou plusieurs protocoles de sécurité basés sur le pair-à-pair.

7. Procédé selon l'un quelconque des modes de réalisation précédents, dans lequel le message d'annonce est diffusé pour permettre la découverte de l'UE par un ou plusieurs autres UE, ou dans lequel le message d'annonce est transmis en réponse à la réception d'un message de découverte en provenance d'un autre UE.

8. Procédé selon l'un quelconque des modes de réalisation précédents, comprenant en outre la transmission d'un message de requête de clé de découverte à un nœud de réseau central et, en réponse, la réception d'un code de service de relais autorisant l'UE à agir en tant que relais dans une connexion U2U.

9. Procédé selon la revendication 8, dans lequel le message d'annonce comprend une indication du code de service de relais.

10. Procédé selon la revendication 8 ou 9, dans lequel le message de requête de clé de découverte comprend en outre une indication de la capacité de l'UE à agir en tant que relais dans une connexion U2U.

11. Procédé selon l'un quelconque des modes de réalisation précédents, comprenant en outre l'établissement d'une connexion U2U avec un UE source et un UE cible.

12. Procédé selon la revendication 11, dans lequel l'établissement de la connexion U2U comprend la réception d'un message de requête de connexion en provenance de l'un ou plusieurs parmi l'UE source et l'UE cible, comprenant une indication d'un protocole de sécurité sélectionné pour l'établissement de la sécurité de la connexion U2U.

13. Procédé réalisé au moyen d'un premier équipement d'utilisateur, UE, comprenant :
la détection d'un message d'annonce transmis par un second UE, le message d'annonce comprenant une indication d'une capacité du second UE à agir en tant que relais dans une connexion U2U et, en réponse à une détermination du fait que le second UE est connecté à un réseau de communication radio, une indication du fait que des protocoles de sécurité basés sur le réseau sont disponibles pour établir la sécurité de la connexion U2U ; et
l'établissement d'une connexion U2U avec un UE cible via le second UE agissant en tant que relais.

14. Procédé selon la revendication 13, dans lequel l'établissement de la connexion U2U comprend la transmission d'un message de requête de connexion au second UE comprenant une indication d'un protocole de sécurité sélectionné pour l'établissement de la sécurité de la connexion U2U.

15. Procédé selon la revendication 13 ou 14, dans lequel l'indication du fait que des protocoles de sécurité basés sur le réseau sont disponibles est contenue dans une liste de protocoles de sécurité disponibles pour établir la sécurité de la connexion U2U.

16. Procédé selon la revendication 15, dans lequel la liste de protocoles de sécurité disponibles comprend une indication d'un ordre de préférence des protocoles de sécurité disponibles pour établir la sécurité de la connexion U2U.

17. Procédé selon la revendication 15 ou 16, dans lequel les protocoles de sécurité disponibles pour établir la sécurité de la connexion U2U comprennent un ou plusieurs protocoles de sécurité basés sur le pair-à-pair.

18. Procédé selon l'une quelconque des revendications 13 à 17, dans lequel le message d'annonce est diffusé par le second UE pour permettre la découverte du second UE, ou comprenant en outre la transmission d'un message de découverte et la réception, en réponse, du message d'annonce en provenance du second UE.

19. Procédé selon l'une quelconque des revendications 13 à 18, comprenant en outre la transmission d'un message de requête de clé de découverte à un nœud de réseau central et, en réponse, la réception d'un code de service de relais autorisant le premier UE à agir en tant qu'UE source ou cible dans une connexion U2U.

20. Procédé selon la revendication 19, dans lequel le message de requête de clé de découverte comprend en outre une indication de la capacité du premier UE à agir en tant qu'UE source ou cible dans une connexion U2U.

21. Équipement d'utilisateur configuré pour réaliser un procédé selon l'une quelconque des revendications 1 à 12, ou équipement d'utilisateur configuré pour réaliser un procédé selon l'une quelconque des revendications 13 à 20.
